# EUROPEAN PATENT APPLICATION

(11) **EP 4 692 605 A1**
(43) Date of publication of application: **11.02.2026**
(21) Application number: 24777761.8
(22) Date of filing: 15.03.2024
(51) Int. Cl.: F16K 1/02

(54) **ELECTRONIC EXPANSION VALVE, THERMAL MANAGEMENT SYSTEM WITH ELECTRONIC EXPANSION VALVE, AND VEHICLE**

(30) Priority: 31.03.2023 CN 202320746149 U
(71) Applicant: BYD Company Limited, Shenzhen, Guangdong 518118 (CN)
(72) Inventor: XU, Min, Shenzhen, Guangdong 518118 (CN); YE, Meijiao, Shenzhen, Guangdong 518118 (CN); LIU, Leqiang, Shenzhen, Guangdong 518118 (CN)
(74) Representative: Mathys & Squire
(86) International application number: PCT/CN2024/081921
(87) International publication number: WO 2024/198972

(57) **Abstract**

An electronic expansion valve (100), a thermal management system (1000) with the electronic expansion valve, and a vehicle (10000), the electronic expansion valve comprising a valve housing assembly provided with a valve port (11) and an accommodating cavity (12), wherein a valve needle assembly moves in a reciprocating manner in the accommodating cavity; a valve needle (23) is defined for being switched from a fully open valve port to a fully closed valve port; the number of pulse steps executed by a rotor assembly is P; a valve port in contact with the valve needle is switched to the fully closed valve port; the number of passing steps executed by the rotor assembly is a valve opening pulse number E of the electronic expansion valve; and P is equal to the product of a and E, wherein a is greater than 12.5, but smaller than 20.

## Description

### CROSS-REFERENCE TO RELATED APPLICATION

The present disclosure claims priority to Chinese Patent Application No. 2023207461499, filed on March 31, 2023, which is incorporated herein by reference in its entirety.

### FIELD

The present disclosure relates to the field of electronic expansion valve, and in particular, to an electronic expansion valve, a thermal management system with electronic expansion valve, and a vehicle.

### BACKGROUND

Electronic expansion valves are commonly used in air conditioning systems or automotive thermal management systems. The electronic expansion valve's opening degrees are regulated by controlling the voltage or current applied to them, thereby controlling the fluid flow rate in the circuit.

In the related technologies, electronic expansion valves suffer from poor control accuracy, which leads to issues such as liquid leakage or failure to meet operational requirements of the electronic expansion valves.

### SUMMARY

Therefore, the present application provides an electronic expansion valve to enhance control accuracy of the electronic expansion valve.

The electronic expansion valve according to this application includes: a valve housing assembly, the valve housing assembly being provided with a valve port and an accommodating cavity, and the valve port being in communication with the accommodating cavity; a valve needle assembly, the valve needle assembly being arranged in the accommodating cavity in a reciprocating manner, and the valve needle assembly including a valve rod, an elastic member, and a valve needle, the elastic member being arranged between a first end of the valve rod and the valve needle, the valve rod moving to drive the valve needle to move so as to open or close the valve port; a stator assembly and a rotor assembly, the stator assembly being arranged in the valve housing assembly, and the rotor assembly being arranged in the accommodating cavity, the stator assembly cooperating with the rotor assembly to allow the rotor assembly to rotate, the rotor assembly cooperating with the valve needle assembly to drive the valve needle assembly to reciprocate; defining the valve needle to switch from fully opening the valve port to fully closing the valve port, wherein the number of pulse steps executed by the rotor assembly is P; the valve needle switching from contacting the valve port to fully closing the valve port, wherein the rotor assembly executes the number of over-closing steps to compress the elastic member, and the number of over-closing steps is defined as a valve opening pulse number E of the electronic expansion valve, the electronic expansion valve satisfying the following relationship: the number of pulse steps P executed by the rotor assembly being equal to a product of *a* and the valve opening pulse number E of the electronic expansion valve, wherein *a* is greater than 12.5 and less than 20.

According to the electronic expansion valve of the present application, the rotor assembly and the valve needle assembly are coordinated to enable the valve needle assembly to reciprocate, thereby selectively opening and closing the valve port, and an elastic member is arranged between the valve rod and the valve needle, and the elastic member is configured to provide a pre-tightening force, wherein the electronic expansion valve is configured to satisfy the following relationship: the number of pulse steps P executed by the rotor assembly is equal to the product of *a* and the valve opening pulse number E of the electronic expansion valve, wherein *a* is greater than 12.5 and less than 20, that is, P = *a**E, wherein 12.5<*a*<20, to ensure the reliability of the coordination between the valve needle and the valve port, to prevent liquid leakage, and at the same time, to guarantee the opening capacity of the electronic expansion valve, and to enhance the control accuracy and qualification rate of the electronic expansion valve.

In some embodiments, a value range of *a* is that a is greater than 15 and less than 18.

In some embodiments, the electronic expansion valve also includes a conversion assembly, which is fixed to the accommodating cavity, the conversion assembly is threaded with the valve rod to ensure that the valve rod is rotatable and movable relative to the conversion assembly, and the rotor assembly is fixed to the valve rod to drive the valve rod to rotate.

In some embodiments, the conversion assembly cooperates with the rotor assembly to limit the number of rotations of the rotor assembly.

In some embodiments, the conversion assembly includes a conversion member and a rotating member, the conversion member is threaded with the valve rod, and a limiting assembly is arranged on an outer periphery of the conversion member; the rotating member being rotatably and movably arranged on the outer periphery of the conversion member, and the rotating member cooperates with the limiting assembly to limit the movement displacement of the rotating member; the rotor assembly including a rotor body and a guide member, the rotor body is sleeved on the conversion assembly, the guide member is fixed to the rotor body, and a portion of the guide member extends along a moving direction of the valve rod, and the guide member abuts against the rotating member to drive the rotating member to rotate.

In some embodiments, the guide member is fixed to the valve rod, and a free end of the valve rod extends out of the guide member.

In some embodiments, a spiral groove is integrally provided on a peripheral wall of the conversion member, and the rotating member is externally sleeved on the conversion member and cooperates with the spiral groove.

In some embodiments, the guide member and the spiral groove are spaced apart from each other in a radial direction of the conversion member.

In some embodiments, a matching spring is fixed to a peripheral wall of the conversion member, and a spiral groove is defined between the matching spring and the peripheral wall of the conversion member, and the rotating member is externally sleeved on the conversion member and matched with the spiral groove.

In some embodiments, the conversion member is provided with a fixed step, which is arranged at one end of the conversion member close to the valve port, and one end of the matching spring is hooked onto a first end surface of the fixed step facing the valve port, and at least a portion of the first end surface is constructed as a slope, which extends inclinedly towards the valve port and away from the matching spring.

In some embodiments, a portion of the rotating member that abuts against the guide member is an abutment portion, and a distance between an end surface of the abutment portion that is away from a central axis of the conversion member and the central axis is greater than a distance between an outer side wall of the guide member and the central axis.

In some embodiments, the valve needle assembly also includes a mounting base, the valve rod cooperates with the mounting base, the elastic member is arranged in the mounting base and one end of the elastic member abuts against the valve rod and another end of the elastic member abuts against the mounting base, and the valve needle is arranged in the mounting base.

In some embodiments, a first gap is arranged between the mounting base and an inner wall of the valve housing assembly, and the mounting base is provided with a balancing hole, wherein the balancing hole connects an internal space of the mounting base and the first gap.

In some embodiments, a second gap is arranged between the valve needle and the inner wall of the valve housing assembly, and the first gap is larger than the second gap.

In some embodiments, the valve port includes a first portion and a second portion, wherein the first portion is located on a side of the second portion close to the valve needle, and in a direction away from the valve needle, a cross-sectional area of the first portion gradually decreasing, a cross-sectional area of the second portion gradually increasing, and when the valve needle fully closes the valve port, an outer wall surface of the valve needle contacts the first portion.

Another purpose of the present application is to provide a thermal management system.

The thermal management system according to the present application includes the above-mentioned electronic expansion valve.

Since the thermal management system is provided with the above-mentioned electronic expansion valve, the valve needle assembly is capable of reciprocating through the cooperation between the rotor assembly and the valve needle assembly, thereby selectively opening and closing the valve port, and an elastic member is arranged between the valve rod and the valve needle, and the elastic member can be configured to provide a pre-tightening force, wherein the electronic expansion valve is configured to satisfy the following relationship: the number of pulse steps P executed by the rotor assembly is equal to the product of *a* and the valve opening pulse number E of the electronic expansion valve, wherein *a* is greater than 12.5 and less than 20, to ensure the reliability of the cooperation between the valve needle and the valve port, to prevent liquid leakage, and at the same time, to guarantee the opening capacity of the electronic expansion valve, and to enhance the control accuracy of the electronic expansion valve, thereby improving the control effect of the thermal management system.

Another purpose of the present application is to provide a vehicle.

The vehicle according to the present application includes the above-mentioned thermal management system.

Since the thermal management system is provided with the above-mentioned electronic expansion valve, the valve needle assembly is capable of reciprocating through the cooperation between the rotor assembly and the valve needle assembly, thereby selectively opening and closing the valve port, and an elastic member is arranged between the valve rod and the valve needle, and the elastic member can be configured to provide a pre-tightening force, wherein the electronic expansion valve is configured to satisfy the following relationship: the number of pulse steps P executed by the rotor assembly is equal to the product of *a* and the valve opening pulse number E of the electronic expansion valve, wherein *a* is greater than 12.5 and less than 20, to ensure the reliability of the cooperation between the valve needle and the valve port, to prevent liquid leakage, and at the same time, to guarantee the opening capacity of the electronic expansion valve, and to enhance the control accuracy of the electronic expansion valve, thereby improving the control effect of the thermal management system, and further improving the thermal management effect of the thermal management system for the vehicle, and improving the user's operating experience.

Additional aspects and advantages of the present application will be partially described below, some of which will become apparent from the description, or will be understood through the practice of the present application.

### BRIEF DESCRIPTION OF THE DRAWINGS

The above and/or additional aspects and advantages of the present application will become apparent and easily understood from the description of the embodiments in conjunction with the following drawings, in which:
FIG. 1 is a structural schematic diagram of an electronic expansion valve according to some embodiments of the present application when a valve port is fully closed;
FIG. 2 is an enlarged view of the circle J in FIG. 1;
FIG. 3 is a structural schematic diagram of an electronic expansion valve according to some embodiments of the present application when a valve port is fully open;
FIG. 4 is a schematic diagram of a valve needle assembly according to some embodiments of the present application;
FIG. 5 is a structural schematic diagram of a conversion assembly according to some embodiments of the present application;
FIG. 6 is a partial structural schematic diagram of an electronic expansion valve according to some other embodiments of the present application;
FIG. 7 is an enlarged view of the circle K in FIG. 6;
FIG. 8 is an enlarged view of the circle M in FIG. 6;
FIG. 9 is a second partial structural schematic diagram of an electronic expansion valve according to some other embodiments of the present application;
FIG. 10 is an enlarged view of the circle N in FIG. 9;
FIG. 11 is a third partial structural schematic diagram of an electronic expansion valve according to some other embodiments of the present application;
FIG. 12 is an enlarged view of the circle O in FIG. 11;
FIG. 13 is a structural schematic diagram of a conversion assembly according to some other embodiments of the present application;
FIG. 14 is an enlarged view of the circle Q in FIG. 13; and
FIG. 15 is a schematic diagram of a vehicle according to some embodiments of the present application.

Reference numerals:
electronic expansion valve 100, valve port 11, first portion 111, second portion 112, accommodating cavity 12, valve seat 13, fluid flow channel 131, valve body 14, connecting flow channel 141, movable channel 142, first gap 143, second gap 144, valve housing 15,
valve needle assembly 20, valve rod 21, limit fitting portion 211, elastic member 22, valve needle 23, body portion 231, transition section 232, guide portion 233, matching portion 234, snap-fitting boss 2341, mounting base 24, nut positioning sheet 241, bushing 25, bearing 26,
stator assembly 30, stator bracket 31,
rotor body 41, guide member 42, connecting plate 43,
conversion assembly 50, conversion member 51, rotating member 52, abutment portion 521, matching spring 53,
first limit member 61, second limit member 62, fixed step 63, first end surface 631,
thermal management system 1000, vehicle 10000.

### DETAILED DESCRIPTION

The embodiments of the present application are described in detail below, and examples of the embodiments are shown in the accompanying drawings, where the same or similar reference numerals throughout represent the same or similar elements or elements having the same or similar functions. The embodiments described below with reference to the accompanying drawings are exemplary and are only used to explain the present application, and will not be understood as limiting the present application.

In the description of the present application, it will be understood that the terms "center", "top", "bottom", "inside", "outside", "axial", "radial", "circumferential", etc., indicating the orientation or positional relationship are based on the orientation or positional relationship shown in the drawings, and are only for the convenience of describing the present application and simplifying the description, rather than indicating or implying that the device or element referred to must have a specific orientation, be constructed and operated in a specific orientation, and therefore will not be understood as a limitation on the present application. In addition, features defined as "first" and "second" may explicitly or implicitly include one or more of the features. In the description of the present application, unless otherwise specified, "multiple" means two or more.

In the description of this application, it should be noted that, unless otherwise clearly specified and limited, the terms "installed", "connected", and "connect" will be understood in a broad sense, for example, it can be a fixed connection, a detachable connection, or an integral connection; it can be a mechanical connection or an electrical connection; it can be a direct connection, or it can be indirectly connected through an intermediate medium, or it can be the internal communication of two components. For ordinary skilled in the art, the specific meanings of the above terms in this application will be understood according to specific circumstances.

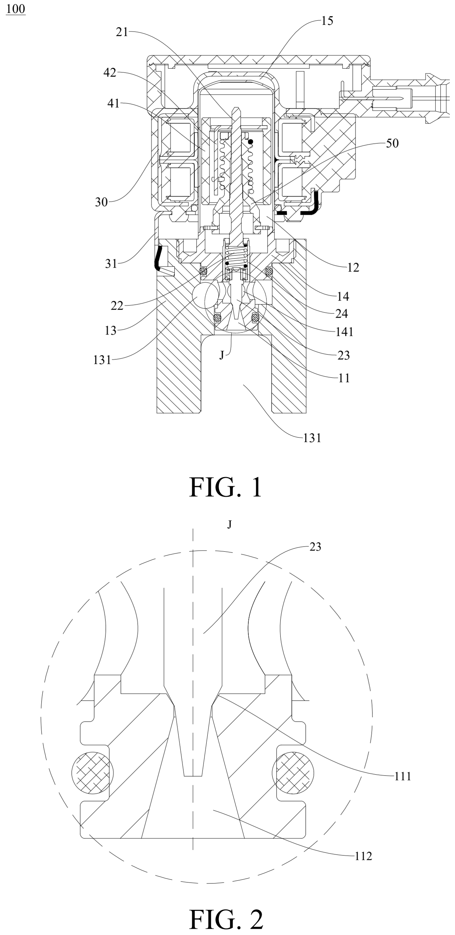

An electronic expansion valve 100 according to the embodiments of the present application is described in detail below with reference to FIGS. 1 to 14.

Referring to FIGS. 1 to 3, the electronic expansion valve 100 according to the present application includes: a valve housing assembly, a valve needle assembly 20, a stator assembly 30 and a rotor assembly, where the valve housing assembly is provided with a valve port 11 and an accommodating cavity 12, the valve port 11 is in communication with the accommodating cavity 12, the valve needle assembly 20 is reciprocatably arranged in the accommodating cavity 12, the valve needle assembly 20 includes a valve rod 21, an elastic member 22 and a valve needle 23, the elastic member 22 is arranged between a first end of the valve rod 21 and the valve needle 23, the valve rod 21 moves to drive the valve needle 23 to move to open or close the valve port 11, the stator assembly 30 is arranged in the valve housing assembly, the rotor assembly is arranged in the accommodating cavity 12, the stator assembly 30 and the rotor assembly cooperate to make the rotor assembly rotatable, and the rotor assembly cooperates with the valve needle assembly 20 to drive the valve needle assembly 20 to reciprocate.

In some embodiments, the stator assembly 30 is installed on the valve housing assembly, the stator assembly 30 is arranged opposite to the rotor assembly, and when the stator assembly 30 is energized, a changing magnetic field is generated to drive the rotor assembly to rotate. The rotor assembly can be in transmission connection with the valve rod 21 to drive the valve rod 21 to reciprocate in the accommodating cavity 12. An end of the valve rod 21 close to the valve port 11 is defined as the first end of the valve rod 21. The first end of the valve rod 21 is connected to the valve needle 23. The valve needle 23 can be used to block the valve port 11, so that the valve needle 23 is driven to selectively open and close the valve port 11 through the reciprocating movement of the valve rod 21.

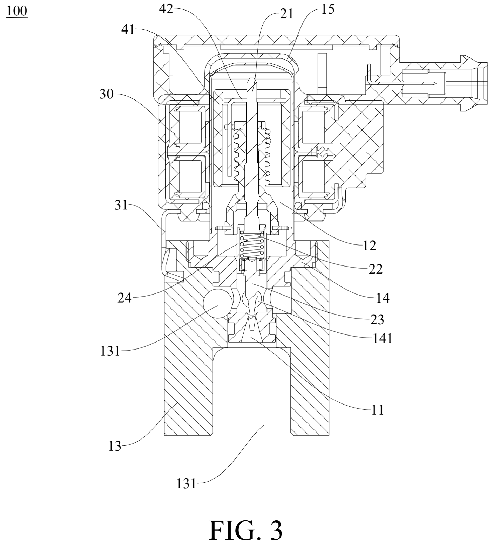

When the rotor assembly drives the valve rod 21 to move toward the valve port 11, the valve rod 21 can drive the valve needle 23 to move toward the valve port 11. As shown in FIGS. 1 and 2, the valve needle 23 is plugged into the valve port 11 so that the valve needle 23 blocks the valve port 11, thereby placing the electronic expansion valve 100 in a closed state. As shown in FIG. 3, when the rotor assembly drives the valve rod 21 to move away from the valve port 11, the valve rod 21 can drive the valve needle 23 to move away from the valve port 11, so as to switch the valve port 11 from a closed state to an open state.

When the valve needle 23 contacts the valve port 11 and switches to fully closing the valve port 11, the stator assembly 30 continues to couple with the rotor assembly to ensure that the rotor assembly continues to execute a certain number of over-closing steps, and the rotor assembly continues to drive the valve rod 21 to move toward the valve port 11. At this time, since the valve needle 23 has abutted against at the valve port 11, the elastic member 22 will be compressed due to the pressure of the valve rod 21, to ensure that the elastic member 22 generates a pre-tightening force, and the valve port is in a fully closed state.

Further, it is defined that when the valve needle 23 fully opens the valve port 11 and switches to fully closing the valve port 11, the number of pulse steps executed by the rotor assembly is P; when the valve needle 23 contacts the valve port 11 and switches to fully closing the valve port 11, the rotor assembly executes the number of over-closing steps to compress the elastic member 22, and the number of over-closing steps is defined as a valve opening pulse number E of the electronic expansion valve 100, and the electronic expansion valve 100 satisfies the following relationship: the number of pulse steps P executed by the rotor assembly is equal to a product of *a* and the valve opening pulse number E of the electronic expansion valve 100, where *a* is greater than 12.5 and less than 20, that is, P= *a* *E, where 12.5<*a*<20.

In some embodiments, "the valve needle 23 fully closes the valve port 11" means that the elastic member 22 generates a pre-tightening force to press the valve needle 23 to ensure that the valve needle 23 can fit reliably with the valve port 11, and "the valve needle 23 contacts the valve port 11" means that the valve needle 23 closes the valve port 11, at this time, the elastic member 22 does not generate a pre-tightening force, thereby the number of pulse steps P executed by the electronic expansion valve 100 including the valve opening pulse number of the electronic expansion valve 100.

With such a configuration, when the valve needle 23 fully closes the valve port 11, the pre-tightening force of the spring can press the valve needle 23. When *a* is greater than 12.5, it can ensure the matching reliability of the valve needle 23 and the valve port 11, and prevent the valve needle 23 from coming out of the valve port 11 when the valve needle 23 is subjected to fluid pressure, thereby ensuring the sealing performance of the electronic expansion valve 100 when fully closed, and preventing the electronic expansion valve 100 from leaking. When *a* is less than 20, it can ensure the opening capacity of the electronic expansion valve 100, preventing the valve from failing to open properly due to excessive pre-tightening force, and also avoiding the situation where the valve opening pulse number E is too large, causing the elastic member to undergo excessive deformation and lose its elastic force, thereby improving the control accuracy and qualification rate of the electronic expansion valve 100.

According to the electronic expansion valve 100 of the present application, the rotor assembly and the valve needle assembly 20 are coordinated to enable the valve needle assembly 20 to reciprocate, thereby selectively opening and closing the valve port 11, and an elastic member 22 is arranged between the valve rod 21 and the valve needle 23, and the elastic member 22 is configured to provide a pre-tightening force, wherein the electronic expansion valve 100 is configured to satisfy the following relationship: the number of pulse steps P executed by the rotor assembly is equal to the product of *a* and the valve opening pulse number E of the electronic expansion valve, wherein *a* is greater than 12.5 and less than 20, so as to ensure the reliability of the coordination between the valve needle 23 and the valve port 11, to prevent liquid leakage, and at the same time, to guarantee the opening capacity of the electronic expansion valve 100, and to enhance the control accuracy and qualification rate of the electronic expansion valve 100.

In some embodiments of the present application, a value range of *a* is greater than 15 and less than 18.

In some embodiments, configuring *a* to be greater than 15 and less than 18 can improve the valve opening ability of the electronic expansion valve 100 while ensuring the reliability of the cooperation between the valve needle 23 and the valve port 11, and can further improve the control accuracy and production qualification rate of the electronic expansion valve 100.

Referring to FIGS. 1 and 3, in some embodiments of the present application, the valve housing assembly includes: a valve seat 13, a valve body 14 and a valve housing 15, wherein the valve seat 13 is provided with an assembly chamber and a plurality of fluid flow channels 131, and the plurality of fluid flow channels 131 are in communication with the assembly chamber, the assembly chamber is configured to install the valve body 14, a valve port 11 and a connecting flow channel 141 connected with the valve port 11 are formed on the valve body 14, and the valve port 11 and the connecting flow channel 141 are respectively connected with different fluid flow channels 131, and the valve housing 15 cooperates with at least one of the valve seat 13 and the valve body 14 to define the accommodating cavity 12.

In some embodiments, the plurality of fluid flow channels 131 are arranged at different positions of the valve seat 13, the valve body 14 is mounted on the valve seat 13, and the plurality of fluid flow channels 131 are respectively connected to external components (e.g., pipes for circulating medium, heat exchangers, and other components in a thermal management system 1000). When the valve port 11 is opened and serves as an outlet, the fluid can flow in from one of the fluid flow channels 131 and flow out from another fluid flow channel 131 through the connecting flow channel 141 and the valve port 11, thereby realizing the conduction function of the electronic expansion valve. When the valve port 11 is opened and serves as an inlet, the fluid can flow into the valve port and the connecting flow channel 141 from one of the fluid flow channels 131 and then flow out from another fluid flow channel 131, thereby realizing the connection function of the electronic expansion valve.

Of course, it can be understood that when the valve needle 11 closes the valve port, a portion of the valve needle 11 is inserted into the connecting flow channel 141 to cut off the flow of the fluid in the connecting flow channel 141.

Furthermore, the stator assembly 30 is sleeved on the valve housing 15, and the stator assembly 30 can be fixedly connected to the valve seat 13 through a stator bracket 31, the rotor assembly is installed in the accommodating cavity 12 and the stator assembly 30 and the rotor assembly are arranged opposite to each other, and when the stator assembly 30 is energized, a changing magnetic field is generated to drive the rotor assembly to rotate, and the rotor assembly is fixedly connected to the valve needle assembly 20 to ensure that the rotor assembly can move in conjunction with the valve needle assembly 20.

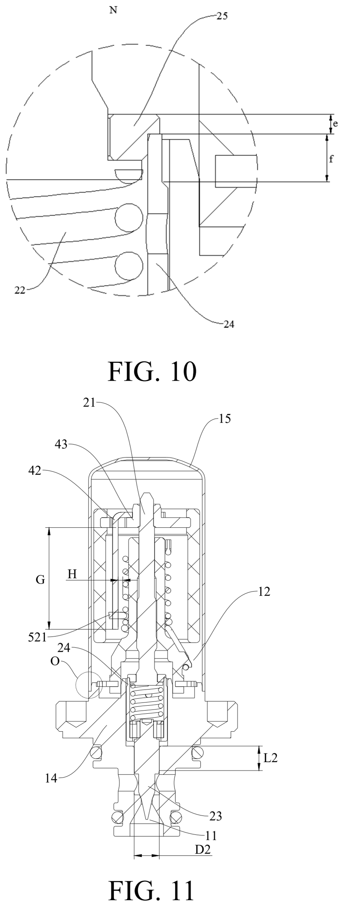

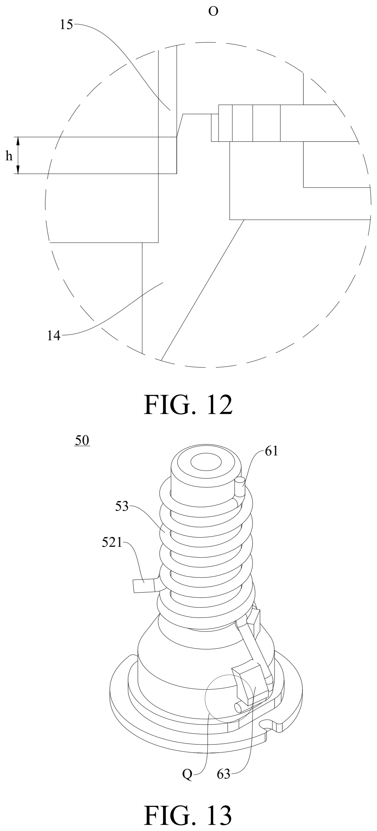

Referring to FIGS. 11 and 12, in some embodiments of the present application, the valve housing 15 and the valve body 14 are interference fit.

In some embodiments, the valve body 14 is fitted with the valve housing 15 in the axial direction, and the valve housing 15 and the valve body 14 can be welded together to ensure a fixed connection between them. The interference fit between the valve body 14 and the valve housing 15 can prevent them from falling off, or prevent the valve body 14 from being skewed after the valve body 14 is welded to the valve housing 15.

In some embodiments, a dimension h of the interference fit between the valve body 14 and the valve housing 15 is 0.8 mm to 1.5 mm, inclusive, and within this range, the interference fit size between the valve body 14 and the valve housing 15 is selected to be 1.2 mm, to prevent the valve housing 15 and the valve body 14 from not fitting properly or the valve body 14 from deforming due to the thinner wall thickness of the valve housing 15, a larger interference fit between the valve body 14 and the valve housing 15, or a longer distance of interference fit.

Referring to FIGS. 1, 4 and 5, in some embodiments of the present application, the electronic expansion valve 100 also includes a conversion assembly 50, which is fixed to the accommodating cavity 12, and the conversion assembly 50 is threaded with the valve rod 21 to ensure that the valve rod 21 can rotate and move relative to the conversion assembly 50, and the rotor assembly is fixed to the valve rod 21 to drive the valve rod 21 to rotate.

In some embodiments, the conversion assembly 50 is arranged in the accommodating cavity 12, and the conversion assembly 50 can be fixedly connected to the valve body 14, the valve rod 21 can be threaded with the conversion assembly 50, and an end of the valve rod 21 facing away from the valve port 11 is fixedly connected to the rotor assembly, and the rotor assembly can drive the valve rod 21 to rotate relative to the conversion assembly 50, at the same time, the threaded engagement between the valve rod 21 and the conversion assembly 50 can convert the rotation of the valve rod 21 into the movement along the axial direction of the valve rod 21. The valve rod 21 drives the valve needle 23 to move along the axial direction of the valve rod 21, so as to selectively open or close the valve port 11.

In some embodiments of the present application, the conversion assembly 50 cooperates with the rotor assembly to limit the number of rotations of the rotor assembly, thereby limiting the movable distance of the valve rod 21 by limiting the number of rotations of the rotor assembly, and limiting the movable distance of the valve needle 23 by limiting the movable distance of the valve rod 21, thereby achieving precise control of the valve needle 23, thereby further enhancing the control accuracy and qualification rate of the electronic expansion valve.

In some embodiments, referring to FIGS. 1 and 3, the rotor assembly is in transmission connection with the conversion assembly 50, and the rotor assembly is rotatable relative to the conversion assembly 50, at the same time, the rotor assembly can move relative to the conversion assembly 50 along the axial direction of the conversion assembly 50, and the conversion assembly 50 can be in a limiting fit with the rotor assembly to limit the number of rotations of the rotor assembly by limiting the distance that the rotor assembly moves relative to the conversion assembly 50.

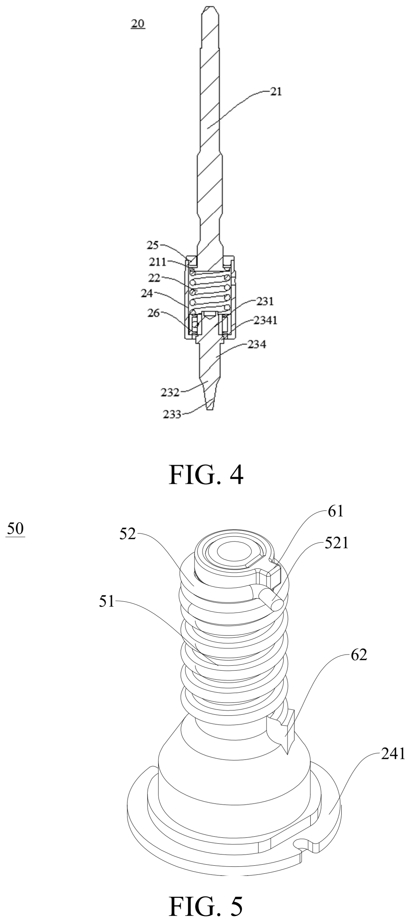

As shown in FIG. 5, in some embodiments of the present application, the conversion assembly 50 includes a conversion member 51 and a rotating member 52, the conversion member 51 is threaded with the valve rod 21, a limiting assembly is arranged in the outer periphery of the conversion member 51, the rotating member 52 is rotatably and movably arranged in the outer periphery of the conversion member 51, the rotating member 52 cooperates with the limiting assembly to limit the movement displacement of the rotating member 52, and the rotor assembly cooperates with the rotating member 52 to drive the rotating member 52 to rotate.

In some embodiments, referring to FIGS. 1, 5 and 6, the rotating member 52 is rotatable relative to the conversion member 51, and the rotor assembly can be in a limiting fit with the rotating member 52 to drive the rotating member 52 to rotate relative to the conversion member 51, the rotating member 52 rotates relative to the conversion member 51 and moves along its axial direction, thereby realizing the linkage between the rotor assembly and the rotating member 52.

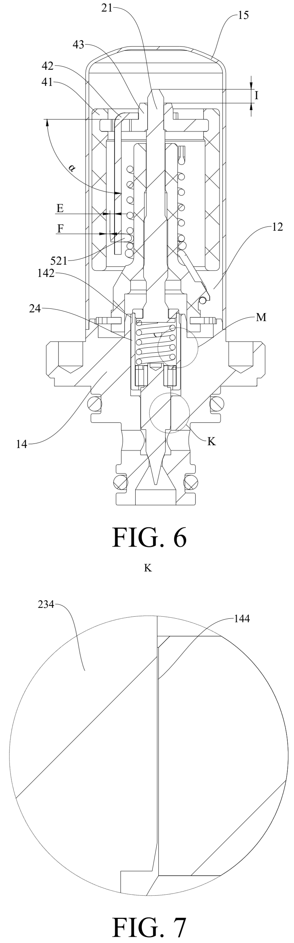

Further referring to FIG. 6, the limiting assembly can limit the displacement of the rotating member 52 relative to the conversion member 51, that is, the limiting assembly can limit the number of rotations of the rotating member 52 and the axial movement distance of the rotating member 52 relative to the conversion member 51, since the rotor assembly and the rotating member 52 are in transmission cooperation, the rotor assembly can be limited from continuing to rotate when the rotating member 52 and the limiting assembly are in limited cooperation, thereby limiting the number of rotations of the rotor assembly. Thus, the structure of the conversion assembly 50 is simple.

Referring to FIGS. 1 and 3, the rotor assembly includes a rotor body 41 and a guide member 42, the rotor body 41 is sleeved on the conversion assembly 50, the guide member 42 is fixed to the rotor body 41, and a portion of the guide member 42 extends along the moving direction of the valve rod 21, the guide member 42 abuts against the rotating member 52.

Referring to FIGS. 1 and 6, at least a portion of the conversion assembly 50 is arranged in the rotor body 41, and the guide member 42 is arranged in the rotor body 41, a connecting plate 43 is arranged in one end of the rotor body 41 facing away from the valve port 11, the connecting plate 43 is fixedly connected to the inner wall surface of the rotor body 41, and the guide member 42 is fixedly connected to the connecting plate 43, to ensure that the guide member 42 is fixedly connected to the rotor body 41, the rotor body 41 can drive the guide member 42 to rotate synchronously, at the same time, a portion of the guide member 42 extends along the axial direction of the conversion member 51 to facilitate the abutment and cooperation with the rotating member 52, the guide member 42 and the rotating member 52 are in abutment and cooperation to achieve the rotor body 41 moving on the conversion member 51 by the guide member 42 driving the rotating member 52, in addition, the conversion member 51 can avoid the guide member 42, so as to prevent the conversion member 51 from interfering with the movement of the guide member 42 and affecting the movement effect of the rotor assembly. Of course, it can be understood that the fixing manner of the guide member 42 and the rotor body 41 is not limited thereto, as long as the fixation can be achieved so that the rotor body 41 can be coupled with the stator assembly and rotate while driving the guide member 42 to rotate.

Furthermore, the limiting assembly is in a limiting fit with the rotating member 52 to limit the movement of the rotating member 52 relative to the conversion member 51, and the rotating member 52 abuts against and cooperates with the guide member 42 to limit the movement of the guide member 42, thereby limiting the number of rotations of the rotor assembly by setting the limiting assembly.

In some embodiments of the present application, a gap between the rotor assembly and an inner wall of the valve housing 15 is 0.35 mm to 0.4 mm, inclusive.

In some embodiments, the rotor body 41 is spaced apart from the valve housing 15 to prevent the valve housing 15 from interfering with the movement of the rotor assembly, the gap between an outer wall of the rotor body 41 and the inner wall of the valve housing 15 is set between 0.35 mm and 0.4 mm to prevent the interval between the stator assembly 30 and the rotor assembly from being too large, thereby ensuring the driving effect of the stator assembly 30 on the rotor assembly, and at the same time, it is possible to prevent the failure of the stator assembly 30 to drive the rotor assembly due to the shaking of the rotor assembly, thereby ensuring the normal operation of the electronic expansion valve 100.

As shown in FIG. 5, in some embodiments of the present application, a spiral groove is integrally formed on the outer peripheral wall of the conversion member 51, and the rotating member 52 is externally sleeved on the conversion member 51 and cooperates with the spiral groove.

In some embodiments, the spiral groove and the conversion member 51 are integrally formed to facilitate the assembly of the electronic expansion valve 100 and simplify the structure of the electronic expansion valve 100, the spiral groove is arranged on the conversion member 51, and the rotating member 52 can be arranged in the spiral groove, and the rotating member 52 is rotatable in the spiral groove, the rotating member 52 rotates relative to the conversion member 51 and moves along its axial direction, by setting a limiting assembly and limiting the length of the spiral groove, the movable distance of the rotating member 52 is limited, the rotating member 52 cooperates with the rotor assembly to limit the number of rotation that the rotor assembly is rotatable.

The conversion member 51 can be configured as a nut with an internal thread and a spiral groove, and the nut can be fixed on the valve body 14 through a nut positioning sheet 241, so as to realize fixing of the conversion assembly 50 on the valve body 14. Referring to FIGS. 1, 3 and 5, the valve rod 21 can be configured as a screw with an external thread structure, the screw can be inserted into the nut and threaded with the internal thread, and the rotating member 52 can move relative to the conversion member 51 through the spiral groove, of course, it will be understood that the above-mentioned structure of the conversion member 51 and the valve rod 21 is an embodiment of the present application and will not be construed as a limitation to the present application.

As shown in FIG. 5, in some embodiments of the present application, the limiting assembly is a first limit member 61 and a second limit member 62 arranged at an interval along the moving direction of the valve rod 21, and the rotating member 52 abuts against one of the first limit member 61 and the second limit member 62 to limit the movement of the rotating member 52. Of course, it will be noted that by controlling the rotor assembly to execute the number of over-closing steps, the rotating member 52 can be located at any position between the first limit member 61 and the second limit member 62, so as to control the cooperation between the valve needle 23 and the valve port 11, adjust the opening degree of the valve port 11, and thereby achieving the purpose of regulating the flow rate.

In some embodiments, the first limit member 61 and the second limit member 62 are spaced apart in the axial direction of the conversion member 51, considering the case where the first limit member 61 is set at the end of the spiral groove that is away from the valve port 11, and the second limit member 62 is set at the end of the spiral groove that is close to the valve port 11, as an example for explanation, as shown in FIG. 5, when the rotating member 52 rotates to the end of the spiral groove away from the valve port 11, the first limit member 61 and the rotating member 52 abut and cooperate to limit the rotating member 52 from continuing to rotate, when the rotating member 52 rotates to the end of the spiral groove close to the valve port 11, the second limit member 62 and the rotating member 52 abut and cooperate to limit the rotating member 52 from continuing to rotate, and the rotor assembly cooperates with the rotating member 52 through transmission, by limiting the number of rotations of the rotating member 52, the number of rotations of the rotor assembly can be limited, the rotor assembly is connected to the valve rod 21, so as to limit the movable distance of the valve rod 21 by limiting the number of rotations of the rotor assembly, and the movable distance of the valve needle 23 is limited by limiting the movable distance of the valve rod 21, thereby achieving precise control of the valve needle 23.

The first limit member 61 and the second limit member 62 can be configured as limit protrusions extending along the radial direction of the conversion member 51, and the limit protrusions can abut against and cooperate with the rotating member 52 in a direction perpendicular to the axis of the conversion member 51 to limit the rotating member 52 from continuing to rotate, thereby limiting the number of rotations of the rotor assembly.

As shown in FIG 13, in some other embodiments of the present application, a matching spring 53 can be fixed on the outer peripheral wall of the conversion member 51, and the two ends of the matching spring 53 are fixed on the conversion member 51, the matching spring 53 and the outer peripheral wall of the conversion member 51 cooperate to define a spiral groove, and the rotating member 52 cooperates with the spiral groove to move relative to the conversion member 51 during the rotation process.

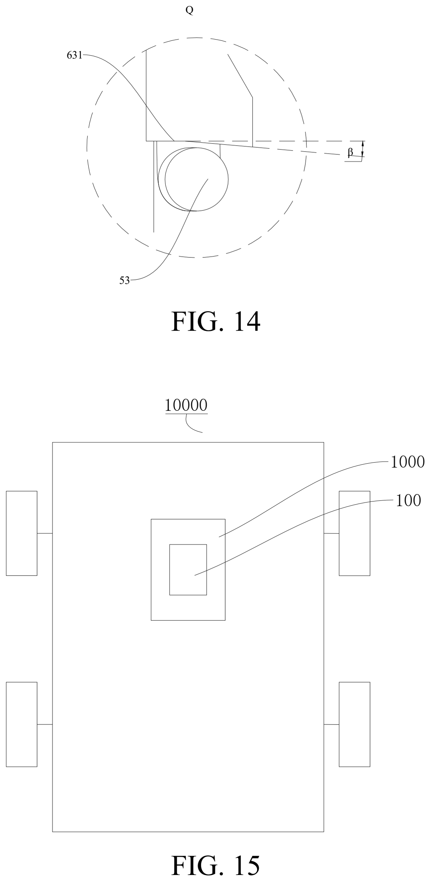

Further referring to FIG. 14, the conversion member 51 is further provided with a fixed step 63, which is provided at one end of the conversion member 51 close to the valve port 11, and one end of the matching spring 53 is fixed on the fixed step 63. Furthermore, one end of the matching spring 53 can be hooked on a first end surface 631 of the fixed step 63 facing the valve port.

Referring to FIGS. 13 and 14, in a further example of the present application, at least a portion of the first end surface 631 is formed as a slope, which can extend obliquely in a direction toward the valve port and away from the matching spring 53, and an included angle β between the first end surface 631 and the horizontal plane can be set to 5° to prevent one end of the matching spring 53 from falling off.

Referring to FIGS. 1, 5 and 6, in some further embodiments of the present application, the rotating member 52 can be configured as a stop ring, the stop ring has an abutment portion 521 extending in a radial direction away from the conversion member 51, the abutment portion 521 is configured to cooperate with the guide member 42, the guide member 42 drives the rotating member 52 to rotate by cooperating with the abutment portion 521, the limiting assembly limits the number of rotations of the rotating member 52 by cooperating with the end of the stop ring, and the rotating assembly is linked with the rotor assembly to limit the number of rotations of the rotor assembly.

Further referring to FIG. 6, an end surface of the abutment portion 521 away from the central axis of the conversion member 51 is spaced from the wall surface (outer wall) of the guide member 42 away from the central axis of the conversion member 51, and a distance between the end surface of the abutment portion 521 away from the central axis of the conversion member 51 and the central axis of the conversion member 51 is greater than a distance between the outer wall of the guide member 42 and the central axis of the conversion member 51, thereby ensuring the abutment effect between the guide member 42 and the abutment portion 521, so as to prevent failure of the fit between the rotor assembly and the rotating member 52 due to failure of the fit between the guide member 42 and the abutment portion 521 during the process of driving the rotating member 52 to rotate. Considering the actual processing angle and tolerance, the distance E between the end surface of the abutment portion 521 away from the central axis of the conversion member 51 and the outer wall of the guide member 42 is selected to be 1.4 mm.

At the same time, the end surface of the abutment portion 521 that is away from the central axis of the conversion member 51 and the inner wall surface of the rotor body 41 are spaced apart to prevent friction between the two, which may cause part failure or interfere with the movement process of the rotor assembly and the rotating member 52 to prevent failure of the electronic expansion valve 100, in some embodiments, considering the actual processing angle and tolerance, a distance F between the end surface of the abutment portion 521 that is away from the central axis of the conversion member 51 and the inner wall surface of the rotor body 41 is configured to be 0.5 mm, and an angle α defined between the portion of the guide member 42 extending in the axial direction and the connecting plate 43 is greater than or equal to 87.7° and less than or equal to 94.3°, in some embodiments, α is configured to be 90° to prevent friction between the guide member 42 and the rotor body 41 to prevent failure of parts.

Further referring to FIGS. 6 and 11, in the axial direction, a distance G between the end of the guide member 42 close to the valve port 11 and the connecting plate 43 is greater than a distance between the stop ring and the connecting plate 43 when the stop ring is closest to the valve port 11 (the distance between the stop ring and the connecting plate 43 when the valve port 11 is fully closed) to prevent the stop ring from disengaging from the guide member 42 when moving in the axial direction, thereby ensuring that the abutted engagement between the stop ring and the guide member 42 is effective. Considering the actual processing angle and tolerance, the distance G between the end of the guide member 42 close to the valve port 11 and the connecting plate 43 is selected to be 15.2 mm.

In addition, referring to FIGS. 6 and 11, the guide member 42 and the spiral groove of the conversion member 51 are spaced apart in the radial direction to prevent the guide member 42 from rubbing against the spiral groove during rotation and causing part failure, and considering the actual processing and assembly errors, a distance H between the wall surface (inner wall) of the guide member 42 close to the central axis of the conversion member 51 and the spiral groove is selected to be 0.7 mm.

As shown in FIG. 6, in some embodiments of the present application, the guide member 42 is fixed to the valve rod 21, and a free end of the valve rod 21 extends out of the guide member 42. Thus, the fixing reliability between the valve rod 21 and the guide member 42 can be ensured.

Furthermore, the connecting plate 43 is fixedly connected to the inner wall surface of the rotor body 41, the valve rod 21 is fixedly connected to the connecting plate 43, and the guide member 42 is fixedly connected to the connecting plate 43, to ensure that the guide member 42 is fixedly connected to the valve rod 21, and the rotor assembly can drive the valve rod 21 to rotate relative to the conversion member 51. Since the valve rod 21 and the conversion member 51 are threadedly engaged, the valve rod 21 can move along the axial direction of the conversion member 51 while rotating relative to the conversion member 51, thereby driving the valve needle 23 to selectively open or close the valve port 11.

As shown in FIG. 6, in some further embodiments of the present application, the valve rod 21 can be welded to the connecting plate 43, and the free end of the valve rod 21 (the end of the valve rod 21 away from the valve needle 23 is defined as the free end of the valve rod 21) penetrates through the connecting plate 43 to improve the stability of the valve rod 21, prevent the end of the valve rod 21 from swinging, and improve the transmission effect of the valve rod 21, a distance I between the top end of the free end of the valve rod 21 and the top end of the connecting plate 43 is selected to be 2.0 mm to ensure the welding strength between the valve rod 21 and the connecting plate 43.

It should be noted that the valve rod 21 and the connecting plate 43 are clearance fit before welding, in order to prevent deflection of the valve rod 21 and the connecting plate 43 before welding, the fitting height between the valve rod 21 and the connecting plate 43 is reasonably designed according to an outer diameter of the valve rod 21 and a gap size between the valve rod 21 and the connecting plate 43, in some embodiments, a gap tolerance between the valve rod 21 and the connecting plate 43 is (+0.005~+0.04), and a ratio (i.e., the aspect ratio) of the fitting height between the valve rod 21 and the connecting plate 43 to the outer diameter of the valve rod 21 is selected to be 1.75.

In the embodiments shown in FIGS. 1 and 3 of the present application, the guide member 42 is directly connected to the rotor body 41, and the guide member 42 is constructed in an L shape, the guide member 42 has a portion extending along the moving direction of the valve rod 21 and a portion extending along a direction perpendicular to the moving direction of the valve rod 21, when the guide member 42 is directly connected to the rotor body 41, the free end of the valve rod 21 is inserted into the portion of the guide member 42 extending along the direction perpendicular to the moving direction of the valve rod 21.

Referring to FIGS. 1 and 4, in some embodiments of the present application, the valve needle assembly 20 also includes a mounting base 24, the valve rod 21 cooperates with the mounting base 24, the elastic member 22 is arranged in the mounting base 24 and one end of the elastic member 22 abuts at the valve rod 21 and the other end abuts at the mounting base 24, and the valve needle 23 is arranged on the mounting base 24.

In some embodiments, referring to FIG. 4, the mounting base 24 can be constructed as a spring sleeve, and a bushing 25 is fixedly arranged at the end of the spring sleeve facing away from the valve port 11, the valve rod 21 can be inserted into the bushing 25 and extend into the spring sleeve, the bushing 25 can play a sealing role between the valve rod 21 and the spring sleeve, thereby improving the sealing effect between the valve rod 21 and the spring sleeve, at the same time, the bushing 25 can reduce the friction between the spring sleeve and the valve rod 21, thereby improving the service life of the electronic expansion valve 100.

The valve rod 21 can slide in the spring sleeve along the axial direction, the end of the valve rod 21 close to the valve needle 23 is provided with a limit fitting portion 211 which can cooperate with the bushing 25, the limit fitting portion 211 and the bushing 25 can abut and cooperate in the axial direction to prevent the valve rod 21 from escaping from the spring sleeve, at the same time, the valve rod 21 can drive the spring sleeve to move in the axial direction through the limit fitting portion 211, wherein a radial dimension of the limit fitting portion 211 can be the same as an inner diameter dimension of the spring sleeve, to ensure that the limit fitting portion 211 can abut and cooperate with the inner circumferential wall of the spring sleeve, thereby improving the matching stability of the valve rod 21 and the spring sleeve and preventing the valve rod 21 from shaking.

Further referring to FIGS. 1 and 4, a bearing 26 is fixed at the end position of the spring sleeve near the valve port 11, the bearing 26 is arranged in the spring sleeve, and the valve needle 23 is fixedly connected to an inner ring of the bearing 26, the elastic member 22 can be configured as a spring, one end of the spring abuts against the valve rod 21, and the other end of the spring abuts against the bearing 26. When the rotor assembly drives the valve rod 21 to move in the direction close to the valve port 11, the valve rod 21 presses against the spring, and the spring has a tendency to drive the bearing 26 to move close to the valve port 11. The bearing 26 drives the spring sleeve to move in the direction close to the valve port 11, so that the valve rod 21 drives the spring sleeve to move in the direction close to the valve port 11, at the same time, the spring sleeve drives the valve needle 23 to move in the direction close to the valve port 11 through the bearing 26, to ensure that the valve needle 23 blocks the valve port 11, thereby realizing the closure of the electronic expansion valve 100.

In addition, the spring can press against the bearing 26 to prevent the spring sleeve from slipping in the axial direction, thereby ensuring the reliability of the matching between the valve needle 23 and the valve port 11 when the electronic expansion valve 100 is closed, and preventing the electronic expansion valve 100 from leaking.

When the rotor assembly drives the valve rod 21 to move away from the valve port 11, the valve rod 21 drives the spring sleeve to move away from the valve port 11 through the limit fitting portion 211, and the spring sleeve drives the valve needle 23 to move away from the valve port 11 through the bearing 26, so as to realize the opening of the electronic expansion valve 100.

Referring to FIGS. 6 and 10, in some further embodiments of the present application, the spring sleeve is overlapped and fixedly connected with the bushing 25 by means of welding, after the spring sleeve is welded to the bearing 26, a weld scar will be formed at the overlap seam, an orthographic projection of the weld scar is arranged on a radial inner side of the orthographic projection of the spring sleeve, that is, an outer peripheral surface of the weld scar and an outer peripheral wall of the spring sleeve are spaced apart in the radial direction, and a distance between the outer peripheral surface of the weld scar and a central axis of the conversion member 51 is less than a distance between the outer peripheral wall of the spring sleeve and the central axis of the conversion member 51, so as to prevent the weld scar from contacting the valve housing assembly and causing the spring sleeve to get stuck when moving.

Further referring to FIG. 10, an axial dimension of the weld scar is less than a sum of an axial dimension e of the bushing 25 protruding from the top end of the spring sleeve and an axial dimension f of the top end of the spring sleeve, in some embodiments, e is equal to 0.5 and f is equal to 1.2 to ensure that the weld scar can cover the overlap seam between the spring sleeve and the bushing 25, thereby improving the connection strength between the bushing 25 and the spring sleeve.

In some other embodiments of the present application, the elastic member 22 may abut against the valve needle 23 as long as the valve rod 21 can drive the valve needle 23 to move synchronously.

In some embodiments of the present application, an escape space is provided at the end of the conversion member 51 near the valve port 11, when the rotor assembly drives the valve rod 21 to move away from the valve port 11, the valve rod 21 can drive the spring sleeve to move away from the valve port 11, and at least a portion of the spring sleeve can be moved into the escape space of the conversion member 51 to reduce the axial dimension of the electronic expansion valve 100.

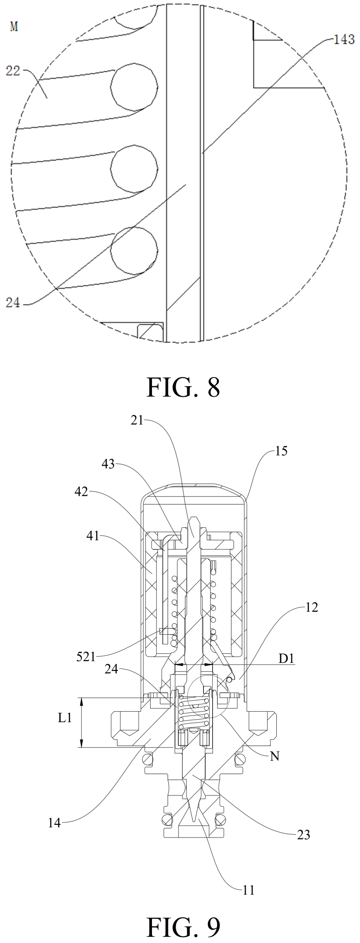

Referring to FIGS. 6 and 8, in some embodiments of the present application, a first gap 143 is provided between the mounting base 24 and the inner wall of the valve housing assembly, and the mounting base 24 is provided with a balancing hole connecting the internal space of the mounting base 24 and the first gap 143.

In some embodiments, in the radial direction, a first gap 143 is formed between the mounting base 24 and the valve body 14, and a balancing hole is formed on the side wall of the mounting base 24 in the circumferential direction, the balancing hole is arranged through the side wall of the mounting base 24 to connect the internal space of the mounting base 24 with the first gap 143.

When the valve needle 23 opens the valve port 11 to allow the fluid to pass through the electronic expansion valve 100, part of the fluid that has flowed into the first gap 143 can flow into the mounting base 24 through the balancing hole, thereby achieving the purpose of pressure relief, thereby reducing the pressure of the fluid when it flows through the electronic expansion valve 100, ensuring the stability of the internal pressure of the electronic expansion valve 100, ensuring the normal operation of the electronic expansion valve 100, and increasing the service life of the electronic expansion valve 100, at the same time, it can reduce the turbulence generated when the fluid flows through the electronic expansion valve 100, and effectively reduce the noise generated when the electronic expansion valve 100 is opened.

Further, in order to ensure that the pressure of the fluid can be quickly balanced after the fluid enters the electronic expansion valve 100 and reduce the fluctuation of the fluid pressure in the thermal management system 1000, it is necessary to make a cross-sectional area of the balancing hole greater than a cross-sectional area of the first gap 143, where a diameter of the balancing hole is set to d, a diameter of a first channel for installing the mounting base 24 is set to c, and a diameter of the mounting base 24 is set to b, then the cross-sectional area of the balancing hole satisfies the following relationship: (πd²/4)>π(c² -b²)/4*2, that is, a product of π and the square of the diameter of the balancing hole divided by 4 is greater than a product of π, the square of the diameter of the first channel minus the square of the diameter of the mounting base 24 divided by 4, and 2, in some embodiments, c is equal to φ6.2, b is equal to φ6.1, and d is equal to φ1, so as to ensure the stability of the internal pressure of the electronic expansion valve 100 and ensure the normal operation of the electronic expansion valve 100.

Referring to FIGS. 6, 7 and 8, in some embodiments of the present application, a movable channel 142 connected to the valve port 11 is provided in the valve housing assembly, and a first gap 143 between the mounting base 24 and an inner wall of the movable channel 142 is larger than a second gap 144 between the valve needle 23 and the inner wall of the movable channel 142.

In some embodiments, a movable channel 142 is formed in the valve body 14, the mounting base 24 is arranged in the valve body 14, and a first gap 143 is formed between the mounting base 24 and the inner wall of the movable channel 142, and a second gap 144 is formed between the valve needle 23 and the inner wall of the movable channel 142, so as to facilitate the movement of the mounting base 24 and the valve needle 23 in the movable channel 142, the valve needle 23 can move to the valve port 11 through the movable channel 142 to selectively open or close the valve port 11.

Furthermore, the second gap 144 is smaller than the first gap 143 to ensure that the guide channel can further guide the valve needle 23, enabling a guiding channel to further guide and limit the valve needle 23, improving the limiting effect of the movable channel 142 on the valve needle 23, meanwhile, the smaller gap between the valve needle 23 and the movable channel 142 can prevent the valve needle 23 from swinging in the movable channel 142, thereby ensuring the cooperation effect between the valve needle 23 and the valve port 11.

In some embodiments of the present application, the movable channel 142 includes a first channel and a second channel that are connected, a cross-sectional area of the first channel is greater than a cross-sectional area of the second channel, the mounting base 24 slides in cooperation with the first channel, and the valve needle 23 slides in cooperation with the second channel.

In some embodiments, the cross-sectional area of the first channel is greater than the cross-sectional area of the second channel to facilitate the assembly of the valve needle 23 and the mounting base 24 from the side away from the valve port 11 toward the valve port 11, after the electronic expansion valve 100 is assembled, the mounting base 24 slides in cooperation with the first channel, and a first gap 143 is formed between the mounting base 24 and the first channel, the valve needle 23 slides in cooperation with the second channel, and a second gap 144 is formed between the valve needle 23 and the second channel, the size of the first gap 143 is greater than the size of the second gap 144.

In some embodiments, a single-side radial dimension of the first gap 143 can be configured to be 0.05 mm, and a single-side radial dimension of the second gap 144 can be configured to be 0.025 mm, when the electronic expansion valve 100 is opened, the fluid flows into the second channel from the valve port 11 through the connecting flow channel, the size of the second gap 144 is less than that of the first gap 143, which can reduce the pressure of the fluid flowing into the electronic expansion valve 100 and ensure the normal operation of the electronic expansion valve 100.

Referring to FIGS. 6 and 9, in some embodiments of the present application, an outer diameter of the matching part of the mounting base 24 and the first channel is D1, a length of the mounting base 24 extending into the first channel is L1, and a ratio of the length L1 to the outer diameter D1 is a first aspect ratio, during the movement of the valve needle assembly 20, the first aspect ratio falls within the following range: 0.8 to 1.4.

In some embodiments, during the movement of the spring sleeve in the first channel, the length L1 of the spring sleeve extending into the first channel will change, by making the first aspect ratio 0.8-1.4, the axial dimension of the spring sleeve can be reasonably set according to the outer diameter D1 of the spring sleeve to prevent excessive eccentricity between the valve needle assembly 20 and the valve port 11 due to the small axial dimension of the spring sleeve, thereby ensuring the matching effect of the valve needle assembly 20 and the valve port 11.

Referring to FIGS. 6 and 11, in some embodiments of the present application, an outer diameter of the matching portion 234 of the valve needle 23 that slides in cooperation with the second channel is D2, a length of the portion of the matching portion 234 that extends into the second channel is L2, and a ratio of the length L2 to the outer diameter D2 is a second aspect ratio, during the movement of the valve needle assembly 20, the ratio of the second aspect ratio falls within the following range: 0.4 to 1.6.

In some embodiments, during the movement of the valve needle 23 in the second channel, the length of the portion of the matching portion 234 extending into the second channel will change, by ensuring that the second aspect ratio falls within the range of 0.4 to 1.6 during the movement of the valve needle assembly 20, the axial dimension of the matching portion 234 can be reasonably designed according to the outer diameter D2 of the valve needle 23 to prevent excessive eccentricity between the valve needle 23 and the valve port 11 due to the small axial dimension of the matching portion 234, thereby ensuring the cooperation effect between the valve needle assembly 20 and the valve port 11.

Referring to FIGS. 1 and 2, in some embodiments of the present application, the valve port 11 includes a first portion 111 and a second portion 112, the first portion 111 is located on a side of the second portion 112 close to the valve needle 23, in the direction away from the valve needle 23, a cross-sectional area of the first portion 111 gradually decreases, and a cross-sectional area of the second portion 112 gradually increases, when the valve needle 23 fully closes the valve port 11, the outer wall surface of the valve needle 23 contacts the first portion 111.

In some embodiments, as shown in FIG. 2, the first portion 111 is arranged at one end of the valve port 11 close to the valve rod 21, and the second portion 112 is disposed at an end of the valve port 11 away from the valve rod 21, the first portion 111 is connected to the second portion 112, and the cross-sectional area of the valve port 11 is minimized at the position where the first portion 111 and the second portion 112 are connected, the volume of the valve needle 23 inserted into the valve port 11 is controlled to control the opening and closing of the electronic expansion valve 100 and the degree of opening of the electronic expansion valve 100, when the electronic expansion valve 100 fully closes the valve port 11, the volume of the valve needle 23 inserted into the valve port 11 is maximized, and the outer wall of the valve needle 23 contacts the first portion 111 to achieve a sealed fit, thereby closing the electronic expansion valve 100 and preventing fluid from flowing into the electronic expansion valve 100.

Referring to FIGS. 1 to 3, the valve needle 23 is driven to move in a direction away from the valve port 11 to release the sealing fit between the valve needle 23 and the first portion 111, thereby opening the electronic expansion valve 100, and the fluid flows toward the first portion 111 through the second portion 112, in the process of the fluid flowing toward the first portion 111, the cross-sectional area of the second portion 112 gradually decreases, thereby preventing the fluid pressure flowing into the electronic expansion valve 100 from being too high.

Furthermore, the valve needle 23 is driven to gradually move in a direction away from the valve port 11 so as to gradually reduce the volume of the valve needle 23 inserted into the valve port 11, and in a direction away from the second portion 112, the cross-sectional area of the first portion 111 gradually increases, thereby causing the opening of the electronic expansion valve 100 to gradually increase, thus, the opening of the electronic expansion valve 100 is controlled by controlling the area of the valve needle 23 inserted into the valve port 11.

Referring to FIGS. 1 and 4, in some embodiments of the present application, in the direction toward the valve port 11, the valve needle 23 includes a body portion 231, a transition section 232 and a guide portion 233 arranged in sequence, the body portion 231 cooperates with the elastic member 22, and cross-sectional areas of the transition section 232 and the guide portion 233 each gradually decrease in the direction toward the valve port 11, and the transition section 232 abuts against the first portion 111.

In some embodiments, the body portion 231 is fixedly connected to the inner ring of the bearing 26, and the body portion 231 is abutted against the elastic member 22 through the bearing 26, and an end of the body portion 231 facing away from the elastic member 22 is fixedly connected to the matching portion 234, and the transition section 232 is connected to the end of the matching portion 234 close to the valve port 11, along the direction extending from the first portion 111 to the second portion 112 of the valve port 11, the cross-sectional area of the transition section 232 gradually decreases, and the peripheral side wall of the transition section 232 can be abutted against the first portion 111 to seal the valve port 11, thereby achieving full closure of the valve port 11.

Furthermore, the guide portion 233 is connected to an end of the transition section 232 close to the second portion 112, and the cross-sectional area of the guide portion 233 gradually decreases along the direction from the first portion 111 to the second portion 112 of the valve port 11, when the valve rod 21 drives the valve needle 23 to move toward the valve port 11, the guide portion 233 can play a guiding role in facilitating the insertion of the valve needle 23 into the valve port 11, at the same time, the guide portion 233 can also play a role in disturbing the flow to reduce the fluid pressure flowing to the electronic expansion valve 100.

As shown in FIG. 4, in some embodiments of the present application, the matching portion 234 is provided with a snap-fitting boss 2341, which is arranged on the radially outer side of the matching portion 234, and the snap-fitting boss 2341 extends from the matching portion 234 along the radial direction toward the direction away from the matching portion 234 to form a boss structure, and the snap-fitting boss 2341 is abutted against the inner ring of the bearing 26 in the axial direction to prevent the valve needle 23 from moving into the mounting base 24 when subjected to fluid pressure, thereby ensuring the sealing effect of the valve needle 23 on the valve port 11.

The thermal management system 1000 in the present application includes the electronic expansion valve 100. The thermal management system 1000 is provided with the above-mentioned electronic expansion valve 100, and the rotor assembly is coordinated and linked with the valve needle assembly 20, to ensure that the valve needle assembly 20 can reciprocate, thereby selectively opening and closing the valve port 11, and an elastic member 22 is provided between the valve rod 21 and the valve needle 23, and the elastic member 22 can be configured to provide a pre-tightening force, where the electronic expansion valve 100 is configured to satisfy the following relationship: the number of pulse steps P executed by the rotor assembly is equal to the product of a and the valve opening pulse number E of the electronic expansion valve 100, where a is greater than 12.5 and less than 20, so as to ensure the cooperation reliability of the valve needle 23 and the valve port 11, and at the same time it is possible to ensure the valve opening ability of the electronic expansion valve 100, thereby improving the control accuracy of the electronic expansion valve 100, thereby improving the control effect of the thermal management system 1000.

The vehicle 10000 in the present application, as shown in FIG. 15, includes the thermal management system 1000. The thermal management system 1000 is provided with the electronic expansion valve 100, and the rotor assembly is coordinated and linked with the valve needle assembly 20, to ensure that the valve needle assembly 20 can reciprocate, thereby selectively opening and closing the valve port 11, and an elastic member 22 is provided between the valve rod 21 and the valve needle 23, and the elastic member 22 can be configured to provide a pre-tightening force, where the electronic expansion valve 100 is configured to satisfy the following relationship: the number of pulse steps executed by the rotor assembly P is equal to the product of *a* and the valve opening pulse number E of the electronic expansion valve 100, where *a* is greater than 12.5 and less than 20, that is, P=*a*×E, wherein 12.5<*a*< 20, so as to ensure the reliability of the cooperation between the valve needle 23 and the valve port 11 and avoid leakage, at the same time, it can ensure the valve opening ability of the electronic expansion valve 100, improve the control accuracy of the electronic expansion valve 100, thereby improving the control effect of the thermal management system 1000, and thereby improving the thermal management effect of the thermal management system 1000 on the vehicle 10000, thereby improving the user experience.

In the description of this specification, the description with reference to the terms "some embodiments", "illustrative embodiments", "examples", "specific examples", or "some examples" means that the specific features, structures, materials or characteristics described in conjunction with the embodiments or examples are included in at least some embodiments or examples of the present application. In this specification, the schematic representations of the above terms do not necessarily refer to the same embodiments or examples. Moreover, the specific features, structures, materials or characteristics described may be combined in any one or more embodiments or examples in a suitable manner.

Although the embodiments of the present application have been shown and described, those skilled in the art will appreciate that various changes, modifications, substitutions and variations may be made to the embodiments without departing from the principles and spirit of the present application, and that the scope of the present application is defined by the claims and their equivalents.

## Claims

1. An electronic expansion valve, comprising:
a valve housing assembly provided with a valve port (11) and an accommodating cavity (12), the valve port (11) being in communication with the accommodating cavity (12);
a valve needle assembly (20), the valve needle assembly (20) being arranged in the accommodating cavity (12) in a reciprocating manner, the valve needle assembly (20) comprising a valve rod (21), an elastic member (22) and a valve needle (23), the elastic member (22) being arranged between a first end of the valve rod (21) and the valve needle (23), and the valve rod (21) moving to drive the valve needle (23) to move so as to open or close the valve port (11);
a stator assembly (30) and a rotor assembly, the stator assembly (30) being arranged in the valve housing assembly, the rotor assembly being arranged in the accommodating cavity (12), the stator assembly (30) and the rotor assembly being cooperated to ensure that the rotor assembly is capable of rotating, and the rotor assembly cooperating with the valve needle assembly (20) to drive the valve needle assembly (20) to reciprocate;
defining the valve needle (23) to switch from fully opening the valve port (11) to fully closing the valve port (11), a number of pulse steps executed by the rotor assembly being P; the valve needle (23) switching from contacting the valve port (11) to fully closing the valve port (11), the rotor assembly executing a number of over-closing steps to compress the elastic member (22), the number of over-closing steps being defined as a valve opening pulse number E of the electronic expansion valve, and the electronic expansion valve meeting the following relation: P=*a*×E, where 12.5 *< a* < 20.

2. The electronic expansion valve according to claim **1,** wherein a value range of *a* is that *a* is greater than 15 and less than 18.

3. The electronic expansion valve according to claim 1 or 2, further comprising a conversion assembly (50), the conversion assembly (50) being arranged within the accommodating cavity (12), the conversion assembly (50) being threaded with the valve rod (21) to ensure that the valve rod (21) is rotatable and movable relative to the conversion assembly (50), the rotor assembly being arranged to the valve rod (21) to drive the valve rod (21) to rotate.

4. The electronic expansion valve according to claim 3, wherein the conversion assembly (50) cooperates with the rotor assembly to limit a number of rotations of the rotor assembly.

5. The electronic expansion valve according to claim **4,** wherein the conversion assembly (50) comprises a conversion member (51) and a rotating member (52), the conversion member (51) is threaded with the valve rod (21), and an outer periphery of the conversion member (51) is provided with a limiting assembly;
the rotating member (52) is rotatably and movably arranged on the outer periphery of the conversion member (51), and the rotating member (52) cooperates with the limiting assembly to restrict displacement of the rotating member (52);
the rotor assembly comprises a rotor body (41) and a guide member (42), the rotor body (41) is arranged outside the conversion assembly (50), the guide member (42) is fixed to the rotor body (41), and a portion of the guide member (42) extends along a moving direction of the valve rod (21), the guide member (42) abuts against the rotating member (52) to drive the rotating member (52) to rotate.

6. The electronic expansion valve according to claim 5, wherein the guide member (42) is fixed to the valve rod (21), and a free end of the valve rod (21) extends beyond the guide member (42).

7. The electronic expansion valve according to claim 5 or 6, wherein a peripheral wall of the conversion member (51) is integrally provided with a spiral groove, and the rotating member (52) is sleeved over the conversion member (51) and cooperates with the spiral groove.

8. The electronic expansion valve according to claim 7, wherein the guide member (42) is spaced apart from the spiral groove in a radial direction of the conversion member (51).

9. The electronic expansion valve according to claim 5 or 6, wherein a peripheral wall of the conversion member (51) is fixed with a matching spring (53), and a spiral groove is defined between the matching spring (53) and the peripheral wall of the conversion member (51), and the rotating member (52) is sleeved over the conversion member (51) and cooperates with the spiral groove.

10. The electronic expansion valve according to claim 9, wherein the conversion member (51) is arranged with a fixed step (63), and the fixed step (63) is arranged at an end of the conversion member (51) close to the valve port (11), and one end of the matching spring (53) is hooked onto a first end surface of the fixed step (63) facing the valve port (11), and at least a portion of the first end surface is constructed as a slope that extends inclinedly towards the valve port (11) and away from the matching spring (53).

11. The electronic expansion valve according to any one of claims 5 to 10, wherein a portion where the rotating member (52) abuts against the guide member (42) is an abutment portion (521), and a distance between an end surface of the abutment portion (521) opposite to a central axis of the conversion member (50) and the central axis is greater than a distance between an outer side wall of the guide member (42) and the central axis.

12. The electronic expansion valve according to any one of claims 1 to 11, wherein the valve needle assembly (20) further comprises a mounting base (24), the valve rod (21) cooperates with the mounting base (24), the elastic member (22) is arranged in the mounting base (24) and one end of the elastic member (22) abuts against the valve rod (21) and another end of the elastic member (22) abuts against the mounting base (24), and the valve needle (23) is arranged in the mounting base (24).

13. The electronic expansion valve according to claim 12, wherein a first gap (143) is arranged between the mounting base (24) and an inner wall of the valve housing assembly, and the mounting base (24) is arranged with a balancing hole, and wherein the balancing hole connects an internal space of the mounting base (24) and the first gap (143).

14. The electronic expansion valve according to claim 13, wherein a second gap (144) is arranged between the valve needle (23) and the inner wall of the valve housing assembly, and the first gap (143) is larger than the second gap (144).

15. The electronic expansion valve according to any one of claims 1 to 14, wherein the valve port (11) comprises a first portion (111) and a second portion (112), the first portion (111) is located on a side of the second portion (112) close to the valve needle (23), and in a direction away from the valve needle (23), a cross-sectional area of the first portion (111) gradually decreases and a cross-sectional area of the second portion (112) gradually increases, when the valve needle (23) fully closes the valve port (11), an outer wall surface of the valve needle (23) contacts the first portion (111).

16. A thermal management system, comprising: the electronic expansion valve according to any one of claims 1 to 15.

17. A vehicle, comprising: the thermal management system according to claim 16.
